(19) **Europäisches Patentamt**

**European Patent Office**

**Office européen des brevets**

(11) **EP 1 258 815 B1**

(12) **EUROPEAN PATENT SPECIFICATION**

(45) Date of publication and mention
of the grant of the patent:
**06.10.2004 Bulletin 2004/41**

(51) Int Cl.⁷: **G06F 17/30**

(21) Application number: **01401273.6**

(22) Date of filing: **16.05.2001**

(54) **A process for extracting keywords**

Prozess zum Extrahieren von Schlüsselwörtern

Processus pour l'extraction de mot-clés

(84) Designated Contracting States:
**AT BE CH CY DE DK ES FI FR GB GR IE IT LI LU MC NL PT SE TR**

(43) Date of publication of application:
**20.11.2002 Bulletin 2002/47**

(73) Proprietor: **Exentis**
**75019 Paris (FR)**

(72) Inventors:
 • **Bourdoncle, François**
 **75014 Paris (FR)**

 • **Lagunas, François**
 **94200 Ivry sur Seine (FR)**

(74) Representative: **Cabinet Hirsch**
 **58, avenue Marceau**
 **75008 Paris (FR)**

(56) References cited:
 **WO-A-99/27469**       **US-A- 5 463 773**
 **US-B1- 6 173 298**

**Description**

The invention relates to the field of information retrieval, and more specifically to keywords used for retrieving information from texts and text databases. It particularly applies to retrieval of information from the Internet.

A number of searching tools exist for searching and retrieving information on the Internet. Alta Vista Company proposed an Internet search site, with a request box where the user may input keywords for retrieving information. The language of the search may be restricted. Other examples of searching tools are provided by Google and Yahoo.

US-A-5 463 773 discloses the building of a document classification tree by recursive optimisation of keyword selection function. There is provided retrieval means for extracting keywords when a document data is inputted, and outputting a classification for the document data, the classification being selected among the classification decision tree. For extracting keywords, this document suggests extracting keywords defined by word sequences. A learning process is suggested for building automatically a document classification tree on the basis of the extracted keywords. The described process goal is to classify documents, and not to build key terms thesaurus. Key terms are used to describe documents, and so key terms quality is not a central issue.

US-A-5 963 965 discloses a method where relevant sets of phrases are automatically extracted from text-based documents in order to build an index for these documents. These phrases are then grouped together in clusters to form a plurality of maps which graphically describe hierarchical relationships between the clusters, and can be used to extract relevant portions of the documents in answer to the user selecting one of these clusters. This patent, like the previous one, describes a collocation-based method. Another collocation-based method is disclosed in Y. Choueka, S.T. Klein, E. Neuwitz. 1983. Automatic retrieval of frequent idiomatic and collocational expressions in a large corpus. Journal of Literary and Linguistic Computing, 4:34-38..

Unsupervised Language Acquisition, Carl. G. de Marcken, Ph.D. thesis submitted to the Department of Electrical Engineering and Computer Science, MIT 1996, Chapter 5, discusses learning under the inference scheme as the searching for the grammar that minimises the combined length of the input and the grammar. It suggests using heuristic algorithms that iteratively update and improve a grammar (or a lexicon) by adding, deleting and otherwise manipulating parameters. The learning process is separated into a stage where the stochastic model is refined according to the lexicon, and a stage where the model is applied to the lexicon to find its underlying structure. The process is exemplified in its use for grouping letters into words; however, there is no discussion of the paradigm used for grouping letter.

WO-A-99 27469 discloses a method for extracting key terms from a data set, each key term being a group of one or more words. There are suggested weighting strategies to rank key terms by relevance. Using stemmed word forms is also suggested : prefix and suffix may be ignored. But there is no suggested method to decide if a computed key term is indeed a linguistically coherent key term.

US-B-6173 298 describes a method to build dynamic collocation dictionary. Well known methods for selecting bigrams are used. But the process is restricted to word-bigrams, so some further checking on key terms cannot occur: truncations of three word lenghted key terms may be selected as relevant bigrams.

Thus, there is a need for a method for defining keywords, that applies to databases of texts and documents.

In one embodiment, the invention suggests using an entropic method for defining keywords in a database of documents. Using an entropic method extracts keywords having a meaning in the database texts. Iterating the steps of the methods allows keywords to be built based on keywords already defined, in a hierarchical or structured way.

More specifically, the invention provides a process for extracting keywords from a database of texts, comprising the steps of:

- (a) providing a dictionary of lexical elements ($W_i$) of texts of the database, an element in the dictionary being associated to a number ($NW_i$) representative of its frequency in said texts;
- (b) providing a collection of sequences ($S_j$) of lexical elements of texts of the database;
- (c) segmenting each sequence into elements of the dictionary ;
- (d) providing a collection of concatenations ($C_k$) of the elements of said segmented sequences; a concatenation in the collection being associated to a number ($NC_k$) representative of its frequency in said database of texts;
- (e) based on the number ($NC_k$) associated to a concatenation ($C_k$) of said collection of concatenation and on the numbers ($NW_i$) associated in the dictionary to the elements forming said concatenation, computing the variation of the sum of the costs of all elements of the dictionary if the concatenation were to be added to the dictionary, the cost of an element being computed as a decreasing and entropic function of the number associated to said element, and
- (f) adding said concatenation to the dictionary according to the results of said computation.

The process may further comprise repeating the steps (c), (d) and (e). The lexical elements may be chosen among words, lemmas, sets formed of a word and an attribute thereof, or sets formed of a lemma and an attribute thereof.

The step (a) of providing a dictionary may comprise selecting lexical elements among all lexical elements of texts of the database.

In this process, a sequence may be an ordered set of lexical elements, or a set of lexical elements adjacent in a text of the database.

The step of providing a collection of sequences can be carried out by extracting from texts of the database sequences having a length lower than a predetermined length ($L_{max}$).

A concatenation in this process is preferably a set of elements of the dictionary adjacent in a segmented sequence, or an ordered set of elements of the dictionary present in a segmented sequence.

In step (e), segmenting each sequence may comprise:

- (e1) determining all possible segmentations of a sequence into elements of the dictionary, and
- (e2) selecting one of said possible segmentations.
    In this case, the step of selecting may be carried out by
- (e21) computing the sum of the costs associated to the elements of the dictionary for each possible segmentation;
- (e22) selecting the segmentation with the smallest sum.

Preferably, a sequence in the collection is associated to a number ($NS_j$) representative of its frequency in said texts and the number ($NC_k$) representative of the frequency of a concatenation ($C_k$) is computed as the sum of the numbers ($NS_j$) associated in said collection of sequences to sequences ($S_j$) containing said concatenation ($C_k$).

The step of adding advantageously comprises:

- (f1) comparing the variation computed for a concatenation to the variation computed for other concatenations; and
- (f2) adding a concatenation to the dictionary according to the results of said comparison.

The cost of a lexical element ($W_i$) of the dictionary may be computed as

$$\ln(NW_i/NW)$$

with $NW_i$ the number of occurrences of the lexical element in the database and NW the number of elements in the dictionary. In this case, the variation in step (e) may be computed as

$$g(x) = - NC_k \cdot \ln(NC_k / NW) - (NW_{k1} - NC_k + 1) \cdot \ln((NW_{k1} - NC_k + 1)/NW) -$$

$$(NW_{k2} - NC_k + 1) \cdot \ln((NW_{k2} - NC_k + 1) / NW)$$

$$- ( - NW_{k1} \cdot \ln(NW_{k1} / NW) - NW_{k2} \cdot \ln(NW_{k2} / NW) )$$

where $NW_{k1}$ and $NW_{k2}$ are the numbers associated to the elements $W_{k1}$ and $W_{k2}$ forming the concatenation $C_k$.

One may also use in the database of texts a log of user's requests. It is also possible, for an entry of the dictionary, to provide a display form of the entry. In this case, the display form for an entry of the dictionary may be selected as the most frequent of all expressions or textual forms of the database of texts that correspond to said entry.

A method embodying the invention will now be described, by way of example only, and in reference to the attached drawings, where

- figure 1 is a view of a dictionary for starting the process of an embodiment of the invention;
- figure 2 is a view of a collection of sequences used in an embodiment of the invention;
- figure 3 to 5 show a flowchart of a process according to the invention.

The invention is based on the consideration that applying information theory to lexical elements in a database of texts entries makes it possible to extract from the database combinations of lexical elements that have a meaning in the texts. For the sake of simplicity, such combinations of lexical elements are designated as "keywords" in the rest of this specification; indeed, keywords are the primary use of such combinations of lexical elements. In this respect, lexical elements in the present specification comprise words, or lemmas; these are lexical elements, as opposed to letters or clusters of letters.

For exemplifying the invention, there is considered in the rest of this specification a database of texts in the English language. The database is comprised of a number of entries; each entry is a text - that is an ordered collection of words in the English language. The invention is applied to the definition of keywords for searching this database and for allowing information to be retrieved from this database. The retrieval of information - the actual use of the keywords - is not the primary purpose of the present invention; it may be carried out by any method known in the art, and will not be discussed here.

The process uses a dictionary. Each entry of the dictionary comprises a lexical element, or an element formed of lexical elements contained in the dictionary. The lexical element could be a word or a lemma of the database texts; an element formed of other elements may be a set of lemmas of the dictionary, ordered or not. Other examples are given below.

In addition, each entry comprises a number. This number is the number of occurrences of the lexical element of the entry in the database. In the rest of this specification, $NW_i$ will denote the number of occurrences of lexical element or set of lexical elements $W_i$.

Although this is an abuse of language, one may refer in the rest of this specification to a lexical element as an "entry" of the dictionary - the entry being strictly speaking formed of the lexical element and of its associated number.

The number $NW_i$ of occurrences of the entry $W_i$ makes it possible to compute a "cost" of this entry, using a function f that associates the cost to this number $NW_i$. The function is chosen and the dictionary is built so as to verify the following properties:

- first, the function f is strictly decreasing; that is if $NW_k < NW_j$ then $f(NW_k) < f(NW_j)$;
- second, for an element of the dictionary formed of other elements of the dictionary, the cost of this element is lower than the sum of the costs of elements that form it.

The fact that the function is decreasing reflects that the more frequent an element is, the smaller its cost should be.

The second criterion is useful for selecting new entrres to be added to the dictionary - these entries being formed of entries already present in the dictionary; it thus helps completing the dictionary with new entries that are relevant. Let $W_1$, $W_2$, .., $Wn$ be entries of the dictionary, and $NW_1$, $NW_2$, ..., $NW_n$ the numbers respectively associated to these entries; let $W_{1+2+...+n}$ a new element of the dictionary, formed of elements $W_1$, $W_2$, ...,$W_n$ and $NW_{1+2+...+n}$ the number associated to $W_{1+2+..+n}$, let NW be the total of number of occurrences associated to entries. With these notations, the second criterion is summarised by the following formula :

$$f(NW_{1+2+...+n}) < f(NW_1) + f(NW_2) + ... + f(NW_n)$$

that is, the cost $NW_{1+2+...+n}$ of the combination $W_{1+2+...+n}$ is lower than the combination of the costs $NW_1$, $NW_2$, ..., $NW_n$ of $W_1$, $W_2$, ..., $W_n$.

For instance, the following functions can be used for the entropic function:

$f(x) = - \ln(x / NW)$ with NW the total number of occurrences, and x the number of occurrences of an element

$f(x) = 1 / x$

The first one is backed by information theory. It measures the optimal code length to associate with entry, in other words it measures the amount of information held by the entry. The second is a heuristic that defines a different behavior from the previous one: computed cost for frequent entries will be higher, and for rare entries it will be lower. In consequence, considering the criterion formerly described, frequent entries will be more easily grouped than previously. This second formula may be used when a more selective filter is needed: the final dictionary will contain very relevant entries.

The function may be considered "entropic". Note that the definition of "entropic" given above may differ from the usual notion of entropic function used in information theory.

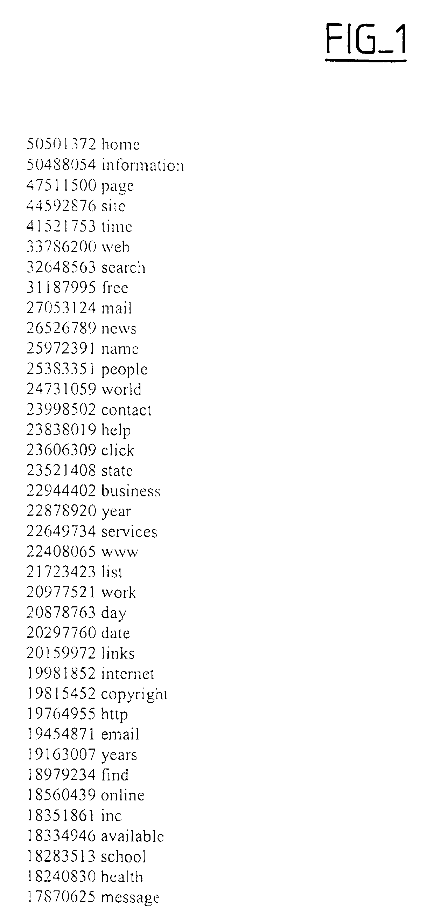

Figure 1 shows a dictionary, at the beginning of the first iteration of the process; this dictionary is used as a starting point for an embodiment of the keyword definition process. The dictionary is built from the entries of the database. It contains all lexical elements $W_i$ of the database. For the sake of simplicity, one will consider in the rest of this example that lexical elements are words; it should be born in mind that lemmas or other lexical elements could be used for populating the dictionary.

As explained above, in addition to words, the dictionary contains for each word $W_i$ a number $NW_i$ representative of its number of occurrences in the database.

Figure 1 thus shows a limited number of words of the dictionary, together with their associated number. From the point of view of data processing, the dictionary of figure 1 may be implemented as a hash table, while the program for populating the dictionary may be a simple run over all documents.

Apart from the dictionary, the other starting point for the process is a collection of sequences $S_j$ of words, which appear in the database. A "sequence" is a set of at least two words that appear in at least one text of the database;

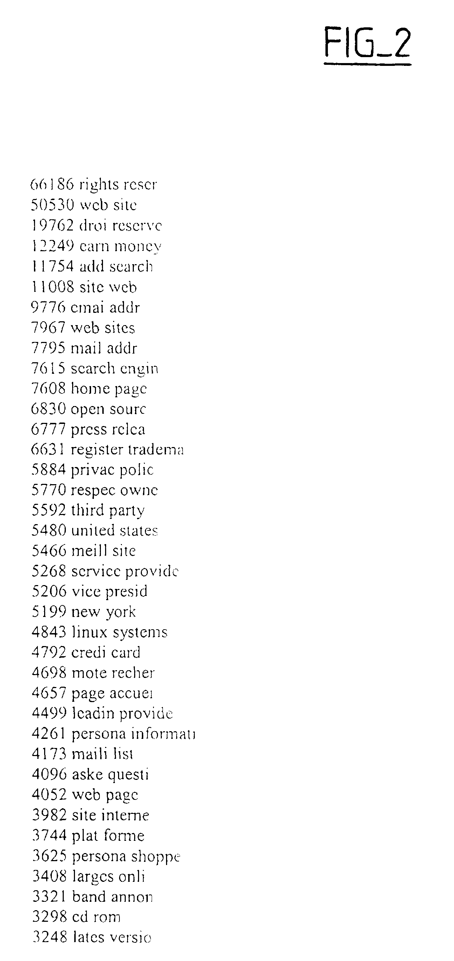

in the example of figure 2, each sequence is ordered, the order of the words being the order in which they appear in the text.

Figure 2 shows part of this collection; in this collection, one uses lemmas and not words. Only some of the sequences are represented in figure 2. As shown on this figure, some sequences have a meaning, e.g. the sequence "press relea", which is the sequence of lemmas for "press release" or the sequence "web site". Other sequences are meaningless; this is the case for the sequence "add search", which is simply formed of two words adjacent in one given text of the database. Each sequence $S_j$ in this collection is associated with a number $NS_j$ representative of its frequency in the database.

The dictionary and the collection of sequences may be formed as discussed now. For populating the dictionary, one simple way is simply to scan all texts of the database and add all the words in the dictionary. Each time a new word is added to the dictionary, its associated number is set to one. When a word already contained in the dictionary is met in the scan of the database entries, the number associated with this word is increased by one. When the database is scanned, the dictionary is populated with the words of the database, associated with their number of occurrences in the database. The method disclosed in this paragraph is the simplest one that may be contemplated for populating the dictionary; other methods or heuristics may be used for populating the dictionary.

For populating the collection of sequences, the method discussed in the previous paragraph may be used; however, instead of populating the dictionary with words, the collection is populated with sequences of words. This may be carried out by first adding into the collection all sequences formed of one word, in a first scan of the database - this being tantamount to building the dictionary. In a second scan of the database, one may add into the collection all sequences formed of two words. One may then in each successive scan add new sequences of words to the database, up to sequences of a given size $L_{max}$. One thus obtains a collection of sequences of words, having a length between one and $L_{max}$; these sequences appear in the database, and are associated with a number representative of their frequency in the database; as this is the case for the occurrences in the dictionary. this number may be normalised.

Again, this method for populating the collection of sequences is possible to carry out in finite time - since the database is finite and $L_{max}$ is a finite number. Other methods may be used for populating the collection of sequences.

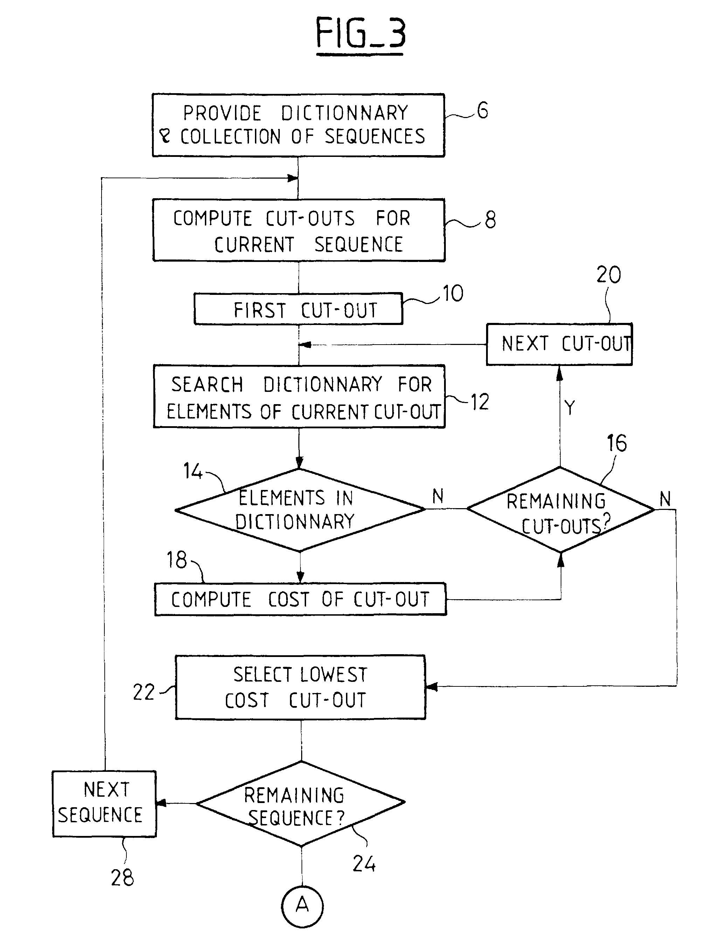

Starting from the dictionary and the collection of sequences, the process adds to the dictionary new entries originating from the collection of sequences. Figure 3 to 5 show a flowchart for this process. The first step 6 consists in procuring the dictionary and the collection of sequences used as a starting point. This step may be carried out as discussed above.

The first part of the process - from step 8 to step 24, depicted in figure 3 - segments all sequences of the collection of sequences into elements of the dictionary. For a given sequence, there may be several ways to segment the sequence into elements of the dictionary; each of these ways is referred to as a "cut-out" of the sequence, or as a "segmented sequence". One of these cut-outs is selected for the following steps of the process.

In the step 8, a current sequence $S_j$ in the collection of sequences is considered. The sequence is then cut out into elements, each element being a word or a smaller sequence of words. Since the length of the sequence is at least two, there exists at least one possible cut-out of the sequence : a sequence of two words may be cut out into these two words. For instance, the sequence of three words "the French republic" could be cut out in the following ways:

- the / French republic;
- the French / republic;
- the / French / republic.

This sequence of three words may thus be cut-out in three different ways - this taking into account the order of words in the sequence, as proposed above for this example. In the example, the first cut-out includes a first element of one word and a second element of two words. More generally, a sequence of $L_{max}$ words may be cut-out into a finite number of ways. Step 8 provides, for the sequence currently considered, a series of cut-outs.

In the next step 10, the first cut-out obtained in step 8 is considered. This cut-out is formed of a number of elements of the dictionary or of combinations of such elements. In step 12, the dictionary is searched for trying to locate each of the elements and combinations forming the cut-out. In step 14, it is determined whether the cut-out currently considered is formed of elements of the dictionary. For instance, in the example "the French republic" considered above, the first and second cut-outs are not necessarily formed of elements of the dictionary : indeed, "French republic" or "the French" do not necessarily appear in the dictionary at this stage of the process.

If this is not the case, the process proceeds to step 16; else, if all elements of the cut-out are present in the dictionary, the process proceeds to step 18.

In step 16, it is determined whether all cut-outs of the sequence currently considered have been analysed. If this is the case, the process proceeds to step 22; else, the process proceeds to step 20. In step 20, the next cut-out is considered, and the process proceeds again to step 12.

In step 18, all elements of the cut-out currently considered are present in the dictionary. As discussed above, each entry of the dictionary is associated to a number $NW_i$ representative of the number of occurrences of the element in the database; this number may therefore be used for computing a cost of the cut-out. The cost of the cut-out or segmented sequence may thus be computed, e.g. based on the cost associated in the dictionary to each element of the cut-out. In the simplest embodiment, the cost of the cut-out is computed as the sum of the costs of its elements.

Other embodiments are possible for computing the cost of a cut-out : one may for instance take into account the number of elements of the dictionary forming the cut-out; this could be done by adding to the sum an amount representative of the number of elements. One may also consider that the cost of a cut-out is only representative of the number of elements; this solution is tantamount to selecting the cut-out formed of the smallest number of elements. One may also add a fixed amount, this fixed amount being a function of the number of elements. For instance, adding a fixed amount when the number of elements is higher than three makes it possible to strongly favour cut-outs having two or three elements. Step 18 thus provides for the cut-out currently considered, a cost based on the number associated to the elements of the cut-out in the dictionary. The process then proceeds to step 16, for the analysis for other cut-outs.

The process loops through steps 12, 14, 18, 16 and 20; it computes costs for all cut-outs obtained for the current sequence - provided the elements of the cut-outs appear in the dictionary. A cost may be computed for at least one cut-out : one of the cut-outs is formed of all the words of the sequence; these words are present in the dictionary, so that a cost may be computed for this cut-out.

In step 22, for the current sequence, the process selects the cut-out having the least cost. Since the cost of at least one cut-out may be computed, step 22 provides one cut-out for the current sequence. This cut-out is actually a representation of the sequence in the dictionary : in other words, the cut-out is one way of forming the sequence by using elements of the dictionary. In the example disclosed above, one of the possible cut-outs is selected; one could also skip this step, and simply take the first identified cut-out for a sequence.

In the next step 24, it is determined whether the process of determining a cut-out with the lowest cost was carried out for each sequence of the collection of sequence. If this is the case, the process proceeds to step 26. Else, if there is at least one sequence left, the process proceeds to step 28. In step 28, the next sequence is considered; the process then goes to step 8.

When the process proceeds to step 26, a cut-out having the lowest cost is associated with each sequence of the collection of sequence; thus, each sequence of the original collection of sequences is segmented into elements of the dictionary; one may optionally select one of several ways to segment a given sequence. The first time the process proceeds to step 26, the sequences are formed of the words originally populated into the dictionary in step 6; at a later stage, the cut-outs may be comprised of other entries previously added to the dictionary.

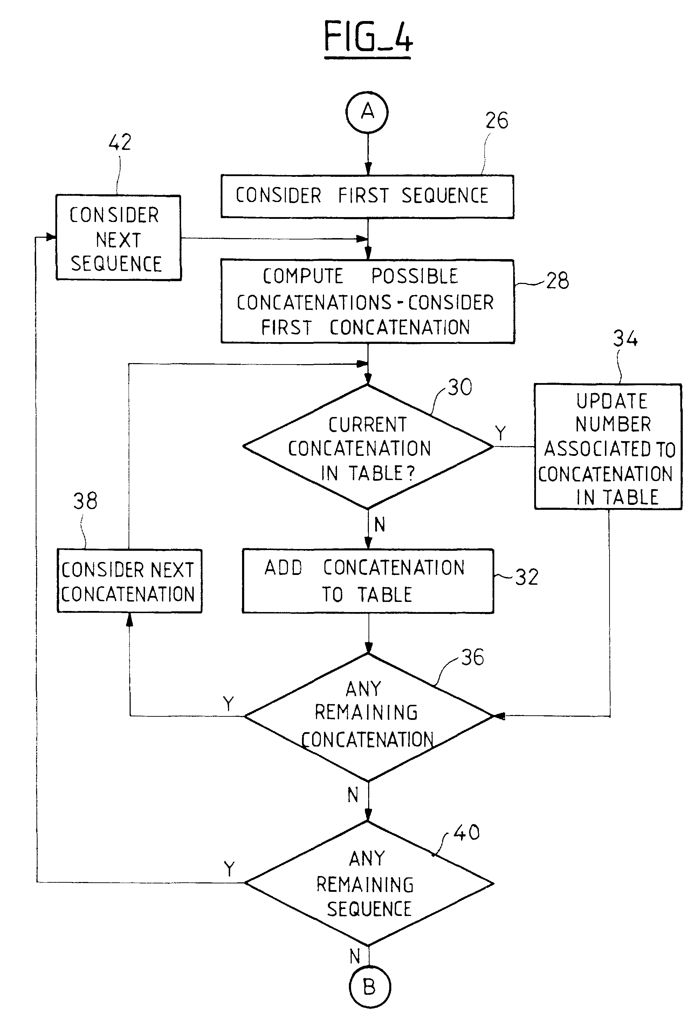

In the second part of the process, from steps 26 to 40, figure 4, based on the collection of cut-outs or segmented sequences obtained in the first part, one considers all possible concatenations $C_k$ of two (or more) adjacent elements in the collection of cut-outs. A given concatenation may appear in one cut-out or in more than one; for each concatenation, there is computed a number $NC_k$ representative of its frequency in the database $_{[gmd\,l]}$.

This may be carried out by populating a table of concatenations, as follows. In step 26, the first sequence $S_j$ is considered. The cut-out obtained in the first part of the process for this sequence is formed of at least two elements; in step 28, one computes all possible concatenations of two of these elements; the first of these concatenations is then considered.

In the next step 30, the table of concatenation is searched for the concatenation $C_k$ currently considered; if this concatenation is not in the table, the process proceeds to step 32; else, it proceeds to step 34. At the time the first concatenation of the first sequence is considered, the table is of course empty.

In step 32, the currently considered concatenation $C_k$ is added to the table; at the same time, the number of occurrences $NC_k$ is set to the number of occurrences $NS_j$ associated to the sequence $S_j$ where the concatenation was found. The process proceeds to step 36.

In step 34, the concatenation $C_k$ currently considered is already in the table of concatenations. The number $NC_k$ of occurrences for this concatenation in the table is then increased by the number of occurrences $NS_j$ associated to the current sequence $S_,$. The process then proceeds to step 36.

In step 36, it is determined whether there remains a concatenation for the sequence currently considered. If this is the case, the process proceeds to step 38, else it proceeds to step 40.

In step 38, the following concatenation is considered; the process then proceeds to step 30.

In step 40, it is determined whether the process of determining concatenations and populating the table of concatenations was carried out for each sequence of the collection of sequence. If this is the case, the process proceeds to step 44. Else, if there is at least one sequence left, the process proceeds to step 42. In step 42, the next sequence is considered; the process then goes to step 28.

Thus, when the process proceeds to step 44, there is provided a table of concatenations, containing all concatenations of two entries of the dictionary found in the cut-outs of the sequence. Each concatenation is associated with the number of its occurrences in the database : indeed, the computation carried out in steps 32 and 34 amount to adding the numbers of occurrences in the database of the sequence in which the concatenation may be found:

$$NC_k = \sum_{j \text{ with } C_k \subset S_j} NS_j.$$

The first and second parts of the process therefore provide concatenations of elements of the dictionary, with a number representative of their frequency in the database. The concatenations are selected among segmented sequences, possibly with a selection of the segmentation carried out for a given sequence : thus, the concatenations are likely to be more meaningful than concatenations randomly selected from the database.

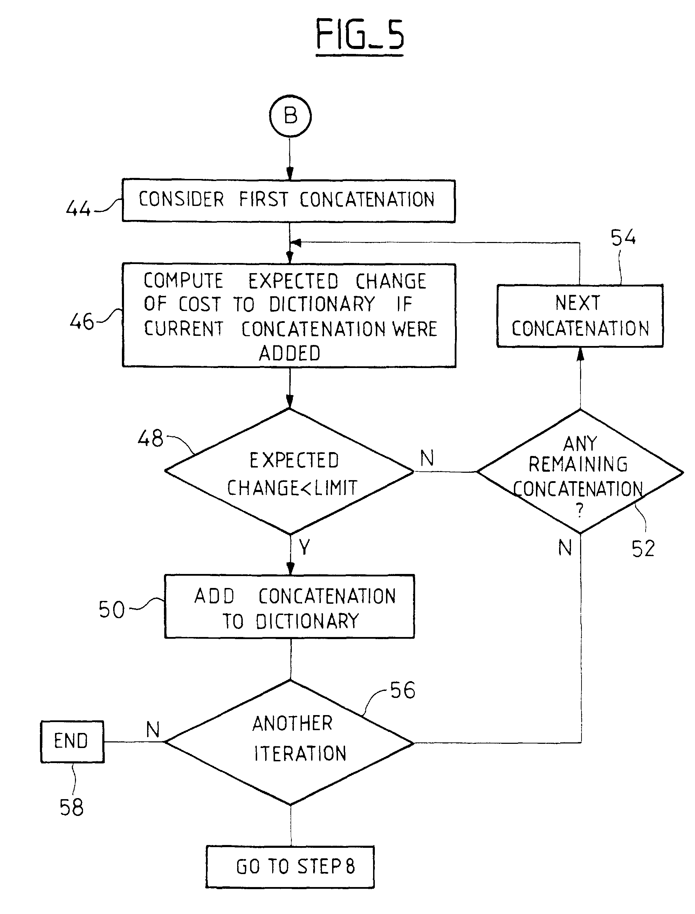

In the third part of the process, from step 44 to step 56, figure 5, it is determined whether the concatenations obtained so far should be added to the dictionary. For a given concatenation, this is carried out by computing the change to the total cost of the dictionary, if the concatenation were to be added to the dictionary. For a given concatenation, this computation is based on the number of occurrences $NC_k$ associated to each concatenation and on the number of occurrences associated in the dictionary to the entries forming the concatenation in the dictionary

This is tantamount to determining whether coding the database texts with a dictionary containing the concatenation provides a code shorter or more compressed than the code of the database texts with the dictionary not containing the concatenation. The invention is thus based on the consideration that applying what is generally understood to be a compression scheme to a database of texts isolates keywords, that is words having a meaning in the database.

Thus, in step 44, the first concatenation $C_k$ is considered; assume that this concatenation is formed of m elements of the dictionary, $W_{k1}$ to $W_{km}$, with $m \leq L_{max}$; in step 46, a second formula g is applied to the number $NC_k$ representative of the frequency of the concatenation in the database and to the numbers $NW_{k1}$ to $NW_{km}$ associated to these elements of the dictionary forming the concatenation. The second formula is representative of the variation of cost for the whole dictionary, if the concatenation were to be added to the dictionary. The second formula will thus be representative of the easiness for adding new entries into the dictionary. As discussed below, the second formula may only be an approximation of the exact variation, or a prediction of this variation, so as to make computation tractable (computationally feasible) and the invention implementable.

The second formula needs to be consistent with the first formula, which gives the cost of single elements; it may be derived from this first formula, under specific approximations. The approximations may be more or less accurate, depending on efficiency-driven algorithmic choices. The purpose is in all cases that the dictionary still complies with the two criteria given above, when new entries added.

In a first example, one may choose to make no approximation for the second formula: the exact variation of cost of the dictionary is then computed. The simplest method therefor comprises the following steps:

- computing and recording the cost of the whole dictionary, defined as the sum of all costs of its entries;
- adding the concatenation to the dictionary,
- computing the cost of the elements of the dictionary completed with the concatenation, as discussed in reference to step 6
- computing the cost of the dictionary completed with the concatenation;
- subtracting from the cost of the completed dictionary the recorded cost of the original dictionary.

One may then revert to the original state of the dictionary - by removing the concatenation - and run once more the computation of costs. It should be obvious that such a computation is untractable in most practical instances.

Second, one may want to use some approximation for computing the expected variation more quickly. For example, one may consider that the total number of entries NW is roughly constant, because there are a lot of entries and choosing or not to add one does not change it in a significant way. This makes it possible to compute the expected variation of cost as :

- the added cost for the concatenation;
- the reduction of cost for the elements of the concatenation which already appeared in the dictionary.

Indeed, adding a concatenation $C_k$ to the dictionary will reduce the number of occurrences of the elements $W_{k1}$ to $W_{kn}$ forming this concatenation, and will therefore impact the numbers $NW_{k1}$ to $NW_{kn}$.

For instance, under the assumption that the chosen entropic formula is $f(x) = -\ln(x / NW)$, and under the assumption that the concatenation is formed of two elements of the dictionary, the approximated variation would originate from the elements of the considered concatenation and the concatenation itself. Then the corresponding formula, called g could be :

$$g(x) = - NC_k \cdot \ln(NC_k / NW) - (NW_{k1} - NC_k + 1) \cdot \ln((NW_{k1} - NC_k + 1) / NW) -$$

$$(NW_{k2} - NC_k + 1) \cdot \ln((NW_{k2} - NC_k + 1) / NW)$$

$$- (- NW_{k1} \cdot \ln(NW_{k1} / NW) - NW_{k2} \cdot \ln(NW_{k2} / NW))$$

where

$NC_k$ is the number of occurrences computed in step 22;
NW is the number of entries in the dictionary;
$W_{k1}$ and $W_{k2}$ are the elements of the dictionary forming the concatenation, $NW_{k1}$ and $NW_{k2}$ being the numbers associated to these elements$_{[GMD2]}$

To understand the formulation of the function "g", it should be noted that the contribution to the total cost variation can be computed for each element of the dictionary. Under the assumption that NW is roughly constant, this variation is null except for $W_{k1}$ and $W_{k2}$ because $NW_k$ will change for these elements only.

Before the addition, the contribution of $W_{k1}$ is $(- NW_{k1} \cdot \ln(NW_{k1}/NW))$ : its cost is $(-\ln(NW_{k1}/NW))$ and it is used $NW_{k1}$ times. This is true for $W_{k2}$ too.

After the addition of $C_k$ ($W_{k1}, W_{k2}$) to the dictionary, each time $C_k$ is used in a cut-out, $W_{k1}$ and $W_{k2}$ are no more used, so their number of occurrence are decreased by $C_k$. Finally, $W_{k1}$ and $W_{k2}$ are used once in the dictionary, in the representation of $C_k$, so their number of occurrence are increased by one. This gives the final cost contribution for $W_{k1}$ and $W_{k2}$:

$$- (NW_{k1} - NC_k + 1) \cdot \ln((NW_{k1} - NC_k + 1) / NW)$$

$$- (NW_{k2} - NC_k + 1) \cdot \ln((NW_{k2} - NC_k + 1) / NW).$$

Finally, $C_k$ contribution is simply $- NC_k \cdot \ln(NC_k / NW)$.

Such an expression may be computed quickly, with only two lookups in the dictionary to find $NW_{k1}$ and $NW_{k2}$.

This formula was written with a specific instance of f among the possible formulas, and for a concatenation formed of two elements. A similar approximated formula may be computed for other instances.

Step 46 thus provides an expected variation of the total cost of the dictionary - the sum of the costs $f(NW_1)$ for all elements of the dictionary - in case the current concatenation were added to the dictionary. In step 48, this expected variation is compared to a predetermined limit. This limit is representative of the easiness for adding new entries into the dictionary, and may be adapted according the circumstances. In the simplest embodiment, the limit is 0, and a concatenation is added if its addition decreases the cost of the dictionary; other embodiments are possible, such as the one discussed below where the expected variation is computed for all concatenations and where the concatenation causing the higher variation (in absolute value) are added to the dictionary. If the variation is lower than the limit, the process proceeds to step 50; else it goes to step 52.

When the process reaches step 50, it is ascertained that the concatenation should be added to the dictionary; the process then computes a number to be associated to this new entry of the dictionary; one may simply use therefore the number $NC_k$ computed earlier, and the formula f.. At this step, one will also compute again the number associated to the elements forming the concatenation that has just been added to the dictionary; indeed, as discussed above, adding a concatenation to the dictionary will impact the number of occurrences of the elements of the concatenation.

In step 52, it appears that the concatenation currently considered need not be added to the dictionary. It is therefore determined whether there is still a concatenation to be considered. If this is the case, the process proceed to step 54, else, it passes to step 56.

In step 54, the next concatenation is considered; the process then passes to step 46. In step 56, all concatenations have been considered, and the third part of the process is ended - at least for this iteration. It is then determined whether another iteration should be carried out. If this is not the case, the process is ended at step 58. If this is the case, the process proceeds back to step 8, where the first sequence is again considered. Since each new entry into the dictionary is associated with a number of occurrences, the process may be iterated based on the new dictionary.

Each iteration of the process results in a number of new entries being added into the dictionary. In the first iteration, the dictionary is originally a dictionary of words, and new entries are formed of two words. However, as from the second iteration, new entries of three or four words may appear in the dictionary. Each iteration will add entries in the dictionary that may be as long as the sequences.

The number of iterations may vary; one may use only one iteration - that is not repeat the three parts described above. One may select a fixed number of iterations, for instance the number of iterations exemplified below. One may also decide to stop iterating in view of the number of entries added in the dictionary in the last iteration; other schemes are also possible, for instance the process may stop iterating once the dictionary contains a given number of words, or when all entries added to the dictionary in the previous iteration are associated with a number of occurrences lower than a predetermined figure.

The process of figure 3 may be implemented by programming in C under some Unix system.

An example of the process of figure 3 is now given. The database of text comprises $4.10^5$ texts in the English languages. Based on this database, a dictionary of $4.10^5$ entries is built; the normalised number of occurrences varies between 4 and $10^4$. The maximum sequence length $L_{max}$ is selected to 6; the collection of sequences built as discussed above contains $1.10^6$ sequences. The process of claim 3 is carried out; in step 18, the formula used for computing the cost of cut-out elements is $f(x) = -\ln (x / NW)$, and g is the previously defined approximation example.

In the first iteration, $15.10^4$ entries of two words are added to the dictionary. The process is iterated 5 times. In the second iteration, $5.10^4$ entries of two words, $9 .10^4$ entries of three words and $2.10^4$ entries of four words are added to the dictionary. In the third iteration $2.10^4$ entries of two words are added to the dictionary, $6.10^4$ entries of three words , $4.10^4$ entries of four words, $2.10^4$ entries of five words, and $10^3$ entries of six words. In the fourth iteration $1.10^4$ entries of two words are added to the dictionary, $2.10^4$ entries of three words , $4.10^4$ entries of four words, $3.10^4$ entries of five words, and $2.10^4$ entries of six words. In the fifth and last iteration $1.10^3$ entries of two words are added to the dictionary, $2.10^3$ entries of three words, $2.10^4$ entries of four words, $4.10^4$ entries of five words, and $4.10^4$ entries of six words.

The method provides a highly relevant keyword set: it selects only a small set among the entire candidate sequences, typically 10%. It provides a filter, not only a scoring function, as for collocation-based methods: collocation-based methods only associate scores to sequences, then sequences are sorted by these scores, and finally a fraction of the top ones may be selected, for example the first half. With the present method, there is no need to decide a priori which score threshold is relevant to split between bad and good keywords.

The dictionary obtained at the end of this process may be used as a dictionary of keywords for indexing the texts of the database. One may also use as keywords only part of the dictionary, e. g.

- entries added to the dictionary during the process; and/or
- original entries having a number of occurrence over a predetermined value.

The process discussed above may be adapted. In one embodiment there is defined a "display" form for the Keywords. One of the examples given above was "Eric's car" and the "car of Eric"; it was explained that these two expressions could provide the same keyword, assuming a given set of rules was selected; the keyword could be formed of the lemmas of the two words (if any), or may be hardly understandable to the user. In such a case, one may define a display form : the display form of a keyword used for displaying the keyword to the user, so that he is faced with an easy to understand expression. The display form of a keyword may for instance be selected as the expression or textual form that is the most frequent among all expressions or textual forms that are abstracted into the same keyword.

In the example discussed in reference to figures 3-5, one uses a database of texts as the basis for the dictionary; in addition or in alternative to such text database, one may use a log of requests inputted by users of a system. One could also start from a database of sequences of words of limited length, extracted from a database of texts. This would provide a set of keywords representative of the interests of the users of a system. One example is the following : for a given keyword, frequency in the database of text is compared to the frequency in the log of requests. According to the results of the comparison, the keywords are ranked before being displayed to the user. This helps taking into account the requests formed by the users, instead of simply considering the database of texts. One could also start from a database of sequences of words of limited length, extracted from texts, e.g. as discussed above in relation to the building of sequences. In this case, the collection of sequence is identical to the database of texts.

In the flowchart of figures 3 to 5 and in the example given immediately above, the simplest rules were considered; specifically,

- entries in the dictionary are formed of words;
- sequences are formed of a certain number of words, in the order in which they are found in the texts of the database;
- a concatenation is formed of adjacent words of a sequence.

These rules may change.

First, as briefly mentioned above, entries in the dictionary may comprise lemmas instead of words; more generally, any lexical elements of the database may be considered. Thus, the process is not limited to words or lemmas, but applies to any type of lexical element selected from the database. One could for instance consider as lexical entries the set formed of a word or lemma together with an attribute of this word or lemma in the sentence where it is found. This would make it possible to distinguish between the different possible uses of the same lemma as noun, verb, adverb, etc. Such attributes may be obtained thank to methods known per se, such as morpho-syntactic taggers.

Second, the dictionary in the example given above is populated with all words present in the database; some of these words may be ignored. This amounts to filtering the lexical elements at the time the dictionary is populated. For instance, one may decide

- to ignore all words which do not have a specific meaning, such as articles;
- to ignore all words having a number of occurrences below / above a predetermined value

this value being an absolute value or a relative value. One may also decide to use only part of the database for populating the dictionary, e.g. when a specific part of the database is considered representative of the complete database. This would notably lower the number of lexical elements and reduce the computation necessary for carrying out the process. This is tantamount to filtering or selecting lexical elements for use in the dictionary.

Third, the sequence-forming rule may vary, and may be different from the example given in reference to figures 3-5; in this example, a "sequence" is formed of elements adjacent in a text of the database. For instance, in another embodiment, the order of words may be irrelevant : in this case a sequence is set of words which may be found in an entry of the database, in any order. This may notably be of interest if order of words (or lemmas) is not relevant in the language of the texts of the database. For instance, this would allow "Eric's car" and "the car of Eric" to be treated as the same sequence - assuming words such as articles are not considered. In this embodiment, the "sequence" does not correspond to the usual meaning of a sequence. As briefly discussed above, the number of lexical elements in a "sequence" may also vary.

Fourth, the rule applied for forming sequences may be different from the one considered in the example of figure 3. In the simplest variation, the order of cut-outs may be irrelevant; in another variation, concatenations may be formed of cut-outs that are not necessarily adjacent; both variations may be combined

It should also be clear that the different rules discussed above may vary independently of each other; for instance the choice of entries into the dictionary may be selected independently of the rule for sequence-forming. The currently preferred set of rules is the one discussed in reference to figures 3-5 : populate the dictionary with all words, build sequences out of adjacent words in the order they have in the texts, and form concatenation with adjacent words;

The selection of rules makes it possible to fit the process to the linguistic rules of the language of the entries to the database; however, one may also select a set of rules and formulas - such as the one disclosed above in reference to figures 3 to 5 - that allows texts in different languages to be processed.

The process is not limited to the description made above, and it may be adapted to the computational means used for carrying it out. Other ways of populating dictionaries and collection of databases may be used. In the example given above, $NW_i$ is simply the number of occurrences of the element $W_1$; this number proves to be simple to compute and record; one may also record the ratio of the number of occurrences of the element to the total number of occurrences, if this proves convenient for further computation of the cost. One could also store the cost itself in the dictionary even though this may prove less practical. One could also record the number of occurrence as well as the cost - both being representations of the same information; the fact that the function is strictly decreasing makes it bi-univocal for positive numbers.

In the third part of the process, the concatenation may be added as new entries in the dictionary at the end of the process; this differs from the embodiment disclosed in figure 3, wherein concatenations are added one by one. The occurrences in the dictionary may be normalised or not. In the example of figure 3, each sequence is associated in the collection of sequences to a number representative of its frequency in the database; this makes it possible to compute the number of occurrences of a concatenation without having to search the database; if another means is provided for computing the number of occurrences or the frequency of a concatenation, then the computation of said number for each sequence may be dispensed with.

In addition, the flowchart discussed above in reference to figures 3 and 4 could be amended. For instance, steps 28-36 of figure 4 could be carried out for one given sequence, after step 22 and before step 24. This simply means that the concatenations for a sequence are computed immediately after the cut-out having the lowest cost is identified.

In the flowchart of figure 5, in step 50 one could simply store the concatenation; all concatenation, or part of them could then be added to the dictionary at a later stage. This proves advantageous inasmuch as it permits selecting some of the proposed new entries - e.g. the most relevant ones only. In addition, in the flowchart of figure 5, the second formula is an approximation; validity of this approximation is not checked in the flowchart of figure 5 - it being assumed that the approximation is close enough to the original entropic function, so that the global features of the dictionary are preserved (first and second conditions given above). It is also possible to ascertain ex post that these properties are preserved. One may for instance add new entries to the dictionary, and then compute again the costs for all the entries of the dictionary. This may prove advantageous if the second formula is a coarse approximation of the first formula; this may also prove advantageous if the number of iterations in the process is high. In both instances, the practical limits of the approximation may be reached

Last, the process was discussed in its preferred embodiment to extracting keywords for searching the database. One may use the keywords for other purposes, e.g. abstracting documents, summarising documents, semantic indexing or natural language parsing.

## Claims

1. A process for extracting keywords from a database of texts, comprising the steps of:

   a) providing (6) a dictionary of lexical elements $W_i$ of texts of the database, an element in the dictionary being associated to a number $NW_i$ representative of its frequency in said texts;
   b) providing (6) a collection of sequences $S_j$ of lexical elements of texts of the database;
   c) segmenting (8) each sequence into elements of the dictionary ;
   d) providing (28) a collection of concatenations $C_k$ of the elements of said segmented sequences; a concatenation in the collection being associated to a number $NC_k$ representative of its frequency in said database of texts;
   e) based on the number $NC_k$ associated to a concatenation $C_k$ of said collection of concatenation and on the numbers $NW_i$ associated in the dictionary to the elements forming said concatenation, computing (46) the variation of the sum of the costs of all elements of the dictionary if the concatenation were to be added to the dictionary, the cost of an element being computed as a decreasing and entropic function of the number associated to said element, and
   f) adding (50) said concatenation to the dictionary according to the results of said computation.

2. The process of claim 1, further comprising

   g) repeating said steps c), d) and e).

3. The process of claim 1 or 2, wherein the lexical elements comprise at least one of words, lemmas, sets formed of a word and an attribute thereof, sets formed of a lemma and an attribute thereof.

4. The process of claim 1, 2 or 3, wherein the step of providing a dictionary comprises selecting lexical elements among all lexical elements of texts of the database, said step of selecting comprising the step of ignoring all lexical elements which do not have a specific meaning and all lexical elements having a number of occurrences below or above a predetermined value.

5. The process of one of claims 1 to 4, wherein a sequence is an ordered set of lexical elements.

6. The process of one of claims 1 to 5, wherein a sequence is a set of lexical elements adjacent in a text of the database.

7. The process of one of claims 1 to 6, wherein the step of providing a collection of sequences comprises extracting from texts of the database sequences having a length lower than a predetermined length $L_{max}$.

8. The process of one of claims 1 to 7, wherein a concatenation is a set of elements of the dictionary adjacent in a segmented sequence.

9. The process of one of claims 1 to 7, wherein a concatenation is an ordered set of elements of the dictionary present in a segmented sequence.

10. The process of one of claims 1 to 9 wherein the step of segmenting each sequence comprise:

    e1) determining (8) all possible segmentations of a sequence into elements of the dictionary, and
    e2) selecting (22) one of said possible segmentations.

11. The process of claim 10, wherein the step of selecting comprises

e21) computing (18) the sum of the costs associated to the elements of the dictionary for each possible segmentation;

e22) selecting (22) the segmentation with the smallest sum.

**12.** The process of one of claims 1 to 11, wherein a sequence in the collection is associated to a number $NS_j$ representative of its frequency in said texts and wherein the number $NC_k$ representative of the frequency of a concatenation $C_k$ is computed as the sum of the numbers $NS_j$ associated in said collection of sequences to sequences $S_j$ containing said concatenation $C_k$.

**13.** The process of one of claims 1 to 12, wherein the step of adding comprises:

f1) computing (46, 48) the variation of the sum of the costs of all elements of the dictionary for a concatenation if the concatenation usere to be added to the dictionary; and

f2) adding (50) a concatenation to the dictionary according to the results of said comparison.

**14.** The process of one of claims 1 to 13, wherein a cost of a lexical element $W_i$ of the dictionary is computed as

$$- \ln(NW_i/NW)$$

with $NW_i$ the number of occurrences of the lexical element in the database and $NW$ the number of elements in the dictionary.

**15.** The process of claim 14, wherein the variation in step (e) is computed as

$$g(x) = - NC_k \cdot \ln(NC_k / NW) - (NW_{k1} - NC_k + 1) \cdot \ln((NW_{k1} - NC_k + 1) / NW) -$$

$$(NW_{k2} - NC_k + 1) \cdot \ln((NW_{k2} - NC_k + 1) / NW)$$

$$- ( - NW_{k1} \cdot \ln(NW_{k1} / NW) - NW_{k2} \cdot \ln(NW_{k2} / NW))$$

where $NW_{k1}$ and $NW_{k2}$ are the numbers associated to the elements $W_{k1}$ and $W_{k2}$ forming the concatenation $C_k$.

**16.** The process of one of claims 1 to 15, wherein the database of texts comprises a log of user's requests.

**17.** The process of one of claims 1 to 16, further comprising the step of

h) for an entry of the dictionary, providing a display form of the entry.

**18.** The process of claim 17, wherein the display form for an entry of the dictionary is the most frequent of all expressions or textual forms of the database of texts that correspond to said entry.

**Revendications**

**1.** Un processus pour extraire des mots-clés dans une base de données de textes, comprenant les étapes consistant à :

a) fournir (6) un dictionnaire des éléments lexicaux $W_i$ des textes de la base de données, un élément du dictionnaire étant associé à un nombre $NW_i$ représentatif de sa fréquence dans lesdits textes ;

b) fournir (6) une collection de séquences $S_j$ des éléments lexicaux des textes de la base de données ;

c) segmenter (8) chaque séquence en éléments du dictionnaire ;

d) fournir (28) une collection de concaténations $C_k$ des éléments desdites séquences segmentées ; une concaténation dans la collection étant associée à un nombre $NC_k$ représentatif de sa fréquence dans ladite base de données de textes ;

e) basé sur le nombre $NC_k$ associé à une concaténation $C_k$ de ladite collection de concaténations et sur les nombres $NW_i$ associés dans le dictionnaire aux éléments formant ladite concaténation, calculer (46) la variation de la somme des coûts de tous les éléments du dictionnaire si la concaténation doit être ajoutée au dictionnaire, le coût d'un élément étant calculé comme une fonction décroissante et entropique du nombre associé au dit élément, et

f) ajouter (50) ladite concaténation au dictionnaire en fonction des résultats dudit calcul.

2. Le processus de la revendication 1, comprenant en outre :

g) la répétition desdites étapes c), d) et e).

3. Le processus de la revendication 1 ou 2, dans lequel les éléments lexicaux comprennent au moins un des mots, des lemmes, des séries formées d'un mot et d'un de ses attributs, des séries formées d'un lemme et d'un de ses attributs.

4. Le processus de la revendication 1, 2 ou 3, dans lequel l'étape consistant à fournir un dictionnaire comprend la sélection des éléments lexicaux parmi tous les éléments lexicaux des textes de la base de données, ladite étape de sélection comprenant l'étape consistant à ignorer tous les éléments lexicaux n'ayant pas de signification spécifique et tous les éléments lexicaux possédant un nombre d'occurrences inférieur ou supérieur à une valeur prédéterminée.

5. Le processus de l'une des revendications 1 à 4, dans lequel une séquence est une série ordonnée d'éléments lexicaux.

6. Le processus de l'une des revendications 1 à 5, dans lequel une séquence est une série d'éléments lexicaux adjacents dans un texte de la base de données.

7. Le processus de l'une des revendications 1 à 6, dans lequel l'étape consistant à fournir une collection de séquences comprend l'extraction des textes de la base de données de séquences possédant une longueur inférieure à une longueur prédéterminée $L_{max}$.

8. Le processus de l'une des revendications 1 à 7, dans lequel une concaténation est une série d'éléments du dictionnaire adjacents dans une séquence segmentée.

9. Le processus de l'une des revendications 1 à 7, dans lequel une concaténation est une série ordonnée d'éléments du dictionnaire présents dans une séquence segmentée.

10. Le processus de l'une des revendications 1 à 9, dans lequel l'étape de segmentation de chaque séquence comprend :

e1) la détermination (8) de toutes les segmentations possibles d'une séquence en éléments du dictionnaire, et
e2) la sélection (22) d'une desdites segmentations possibles.

11. Le processus de la revendication 10, dans lequel l'étape de sélection comprend :

e21) le calcul (18) de la somme des coûts associés aux éléments du dictionnaire pour chaque segmentation possible ;
e22) la sélection (22) de la segmentation avec la somme la plus petite.

12. Le processus de l'une des revendications 1 à 11, dans lequel une séquence dans la collection est associée à un nombre $NS_j$ représentatif de sa fréquence dans lesdits textes et dans lequel le nombre $NC_k$ représentatif de la fréquence d'une concaténation $C_k$ est calculé comme la somme des nombres $NS_j$ associés dans ladite collection de séquences à des séquences $S_j$ contenant ladite concaténation $C_k$.

13. Le processus de l'une des revendications 1 à 12, dans lequel l'étape d'ajout comprend :

f1) le calcul (46, 48) de la variation de la somme des coûts de tous les éléments du dictionnaire pour une concaténation si la concaténation doit être ajoutée au dictionnaire ; et
f2) l'ajout (50) d'une concaténation au dictionnaire en fonction des résultats de ladite comparaison.

**14.** Le processus de l'une des revendications 1 à 13, dans lequel un coût d'un élément lexical $W_i$ du dictionnaire est calculé comme

$$- \ln(NW_i/NW)$$

avec $NW_i$ représentant le nombre d'occurrences de l'élément lexical dans la base de données et $NW$ le nombre d'éléments dans le dictionnaire.

**15.** Le processus de la revendication 14, dans lequel la variation de l'étape e) est calculée comme

$$g(x) = -NC_k \cdot \ln(NC_k/NW) - (NW_{k1}-NC_k+1) \cdot \ln((NW_{k1}-NC_k+1)/NW) -$$

$$(NW_{k2}-NC_k+1) \cdot \ln((NW_{k2}-NC_k+1)/NW) - (-NW_{k1}.\ln(NW_{k1}/NW) -$$

$$NW_{k2}.\ln(NW_{k2}/NW))$$

où $NW_{k1}$ et $NW_{k2}$ sont les nombres associés aux éléments $W_{k1}$ et $W_{k2}$ formant la concaténation $C_k$.

**16.** Le processus de l'une des revendications 1 à 15, dans lequel la base de données de textes comprend un journal des demandes de l'utilisateur.

**17.** Le processus de l'une des revendications 1 à 16, comprenant en outre l'étape consistant à :

h) pour une entrée du dictionnaire, fournir un format d'affichage de l'entrée.

**18.** Le processus de la revendication 17, dans lequel le format d'affichage pour une entrée du dictionnaire est la plus fréquente de toutes les expressions ou formes textuelles de la base de données de textes correspondant à cette entrée.

**Patentansprüche**

**1.** Verfahren zum Extrahieren von Stichwörtern aus einer Datenbank mit Texten, der die Schritte aufweist:

a) Bereitstellen (6) eines Wörterbuches mit lexikalischen Elementen $W_i$ aus Texten der Datenbank, wobei ein Element in dem Wörterbuch mit einer Zahl $NW_i$ verbunden ist, die seine Häufigkeit in den Texten verkörpert;
b) Bereitstellen (6) einer Sammlung von Sequenzen $S_j$ von lexikalischen Elementen von Texten der Datenbank;
c) Segmentieren (8) jeder Sequenz in Elemente des Wörterbuchs;
d) Bereitstellen (28) einer Sammlung von Verkettungen $C_k$ der Elemente der segmentierten Sequenzen; wobei eine Verkettung in der Sammlung mit einer Anzahl $NC_k$ verbunden ist, die seine Häufigkeit in der Text-Datenbank verkörpert;
e) basierend auf der Anzahl $NC_k$, die mit einer Verkettung $C_k$ der Sammlung von Verkettungen verbunden ist, und auf den Anzahlen $NW_i$, die in dem Wörterbuch mit den Elementen verbunden sind, die die Verkettungen bilden, Berechnen (46) der Variation der Summe der Preise aller Elemente des Wörterbuchs, falls die Verkettungen dem Wörterbuch hinzugefügt wurden, wobei der Preis eines Elements als eine abnehmende und entropische Funktion der Anzahl berechnet wird, die mit dem Element verbunden ist, und
f) Hinzufügen (50) der Verkettung zu dem Wörterbuch gemäß den Ergebnissen der Berechnung.

**2.** Verfahren gemäß Anspruch 1, ferner aufweisend:

g) Wiederholen der Schritte c), d) und e).

**3.** Verfahren gemäß den Ansprüchen 1 oder 2, wobei die lexikalischen Elemente wenigstens eines aus Wörtern, Lemmas, Sätzen, die aus einem Wort gebildet sind und ein Attribut davon, Sätze, die aus einem Lemma gebildet sind und einem Attribut davon, aufweisen.

**4.** Verfahren gemäß den Ansprüchen 1, 2 oder 3, wobei der Schritt des Bereitstellens eines Wörterbuches, das Auswählen lexikalischer Elemente unter allen lexikalischen Elementen von Texten der Datenbank aufweist, wobei der Schritt des Auswählens den Schritt des Ignorierens aller lexikalischer Element, die keine spezifische Bedeutung haben und aller lexikalischen Elementen mit einer Anzahl von Vorkommen unter oder über einem vorgegebenen Wert aufweist.

**5.** Verfahren gemäß einem der Ansprüche 1 bis 4, wobei eine Sequenz ein geordneter Satz von lexikalischen Elementen ist.

**6.** Verfahren gemäß einem der Ansprüche 1 bis 5, wobei eine Sequenz ein Satz von lexikalischen Elementen ist, die in einem Text der Datenbank benachbart sind.

**7.** Verfahren gemäß einem der Ansprüche 1 bis 6, wobei der Schritt des Bereitstellens einer Sammlung von Sequenzen, das Extrahieren von Sequenzen mit einer Länge, die kleiner als eine vorgegebene Länge $L_{max}$ ist, aus Texten der Datenbank aufweist.

**8.** Verfahren gemäß einem der Ansprüche 1 bis 7, wobei eine Verkettung ein Satz von Elementen des Wörterbuches ist, die in einer segmentierten Sequenz benachbart sind.

**9.** Verfahren gemäß einem der Ansprüche 1 bis 7, wobei eine Verkettung ein geordneter Satz von Elementen des Wörterbuches ist, die in einer segmentierten Sequenz vorhanden ist.

**10.** Verfahren gemäß einem der Ansprüche 1 bis 9, wobei der Schritt des Segmentierens jeder Sequenz aufweist:

e1) Bestimmen (8) aller möglichen Segmentationen einer Sequenz in Elemente des Wörterbuchs, und
e2) Auswählen (22) einer der möglichen Segmentationen.

**11.** Verfahren gemäß Anspruch 10, wobei der Schritt des Auswählens aufweist:

e21) Berechnen (18) der Summe der Preise, die mit den Elementen des Wörterbuchs verbunden sind, für jede mögliche Segmentation;
e22) Auswählen (22) der Segmentation mit der kleinsten Summe.

**12.** Verfahren gemäß einem der Ansprüche 1 bis 11, wobei eine Sequenz in der Sammlung mit einer Anzahl $NS_j$ verbunden ist, die ihre Häufigkeit in den Texten verkörpert, und wobei die Anzahl $NC_k$, die die Häufigkeit einer Verkettung $C_k$ verkörpert, als die Summe der Anzahlen $NS_j$ berechnet wird, die in der Sammlung von Sequenzen mit Sequenzen $S_j$ verbunden sind, die die Verkettung $C_k$ aufweisen.

**13.** Verfahren gemäß einem der Ansprüche 1 bis 12, wobei der Schritt des Hinzufügens aufweist:

f1) Berechnen (46, 48) der Variation der Summe der Preise aller Elemente des Wörterbuchs für eine Verkettung, falls die Verkettungen dem Wörterbuch hinzugefügt werden sollen; und
f2) Hinzufügen (50) einer Verkettung zu dem Wörterbuch gemäß den Ergebnissen des Berechnens.

**14.** Verfahren gemäß einem der Ansprüche 1 bis 13, wobei der Preis eines lexikalischen Elements $W_i$ des Wörterbuchs berechnet werden, als

$$- \ln(NW_i/NW),$$

wobei $NW_i$ die Anzahl von Vorkommen des lexikalischen Elements in der Datenbank ist, und $NW$ die Anzahl von Elementen in dem Wörterbuch ist.

**15.** Verfahren gemäß Anspruch 14, wobei die Variation in Schritt (e) berechnet wird als

$$g(x) = -NC_k * \ln(NC_k/NW) - (NW_{k1} - NC_k + 1) * \ln((NW_{k1} - NC_k + 1)/NW)$$

$$- (NW_{k2}-NC_k+1) * \ln((NW_{k2}-NC_k+1)/NW)$$

$$-(-NW_{k1}*\ln(NW_{k1}/NW) - NW_{k2} * \ln(NW_{k2}/NW)),$$

wobei $NW_{k1}$ und $NW_{k2}$ die Anzahlen sind, die jeweils mit den Elementen $W_{k1}$ bzw. $W_{k2}$, die die Verkettung $C_k$ bilden, verbunden sind.

**16.** Verfahren gemäß einem der Ansprüche 1 bis 15, wobei die Text-Datenbank ein Protokoll für Benutzeranfragen aufweist.

**17.** Verfahren gemäß einem der Ansprüche 1 bis 16, ferner aufweisend den Schritt des

h) Bereitstellens einer Anzeigeform des Eintrags für einen Eintrag des Wörterbuchs.

**18.** Verfahren gemäß Anspruch 17, wobei die Anzeigeform für einen Eintrag des Wörterbuches die häufigste von allen Ausdrücken oder Textformen der Text-Datenbank ist, die mit dem Eintrag verbunden sind.

# FIG_1

50501372 home
50488054 information
47511500 page
44592876 site
41521753 time
33786200 web
32648563 search
31187995 free
27053124 mail
26526789 news
25972391 name
25383351 people
24731059 world
23998502 contact
23838019 help
23606309 click
23521408 state
22944402 business
22878920 year
22649734 services
22408065 www
21723423 list
20977521 work
20878763 day
20297760 date
20159972 links
19981852 internet
19815452 copyright
19764955 http
19454871 email
19163007 years
18979234 find
18560439 online
18351861 inc
18334946 available
18283513 school
18240830 health
17870625 message

# FIG_2

66186 rights reser
50530 web site
19762 droi reserve
12249 earn money
11754 add search
11008 site web
9776 emai addr
7967 web sites
7795 mail addr
7615 search engin
7608 home page
6830 open sourc
6777 press relea
6631 register tradema
5884 privac polic
5770 respec owne
5592 third party
5480 united states
5466 meill site
5268 service provide
5206 vice presid
5199 new york
4843 linux systems
4792 credi card
4698 mote recher
4657 page accuei
4499 leadin provide
4261 persona informati
4173 maili list
4096 aske questi
4052 web page
3982 site interne
3744 plat forme
3625 persona shoppe
3408 larges onli
3321 band annon
3298 cd rom
3248 lates versio

# FIG_3

PROVIDE DICTIONNARY & COLLECTION OF SEQUENCES — 6

COMPUTE CUT-OUTS FOR CURRENT SEQUENCE — 8

FIRST CUT-OUT — 10

NEXT CUT-OUT — 20

SEARCH DICTIONNARY FOR ELEMENTS OF CURRENT CUT-OUT — 12

ELEMENTS IN DICTIONNARY — 14

REMAINING CUT-OUTS? — 16

COMPUTE COST OF CUT-OUT — 18

SELECT LOWEST COST CUT-OUT — 22

NEXT SEQUENCE — 28

REMAINING SEQUENCE? — 24

A

# FIG_4

# FIG_5

```
                    B

44  CONSIDER  FIRST  CONCATENATION

46  COMPUTE    EXPECTED  CHANGE           54
    OF COST  TO DICTIONARY   IF              NEXT
    CURRENT  CONCATENATION WERE          CONCATENATION
            ADDED

48      EXPECTED          N        ANY
      CHANGE<LIMIT              REMAINING
                            CONCATENATION
            Y                     ?        52
                                  N
50  ADD   CONCATENATION
      TO  DICTIONARY

                              56
END    N      ANOTHER
             ITERATION
58

        GO TO STEP 8
```